# EUROPEAN PATENT APPLICATION

(11) **EP 1 715 461 A2**
(43) Date of publication of application: **25.10.2006**
(21) Application number: 06008137.9
(22) Date of filing: 19.04.2006
(51) Int. Cl.: G07C 9/00, G06F 21/00

(54) **Automated teller machine**

(30) Priority: 20.04.2005 JP 2005122006
(71) Applicant: Hitachi-Omron Terminal Solutions, Corp., Tokyo 1410032 (JP)
(72) Inventor: Fujioka, Toshinori, Chiyoda-ku Tokyo 100-8220 (JP)
(74) Representative: Strehl Schübel-Hopf & Partner

(57) **Abstract**

An automated teller machine includes: biometric authentication determining means for determining whether or not the user's biometric authentication is necessary; a biometric authentication processing mode for performing biometric authentication processing by collating the user's biometric information obtained by the biometric information reading unit with the user's biometric information previously registered in the storage unit; and an IC card authentication processing mode for authenticating the card when the card to be used is an IC card, and, according to results determined by the biometric authentication determining means, first processing for verifying the user's identity by the biometric authentication processing mode is performed when the biometric authentication is necessary, and second processing for verifying the user's identity by the IC card authentication processing mode is performed when the biometric authentication is unnecessary.

## Description

### BACKGROUND OF THE INVENTION

The present invention relates to an automated teller machine, and more particularly to automated teller machines ("ATMs") installed in offices of financial institutions or the like, for authenticating a user's identity using the user's biometric information to conduct cash transactions, and a system thereof.

Recently, crimes have occurred wherein cash transactions are made using stolen cards, counterfeit cards or the like at ATMs, and therefore, further improvement of security has been demanded for the cash transactions using ATMs . As a countermeasure thereof, a system for previously registering a user's biometric information such as a fingerprint in an IC chip of a card issued by a financial institution to verify the user's identity based on the read biometric information has been proposed.

J.P-A No. 067523/2001 (Patent Document 1) discloses a collating system wherein fingerprint information on an owner or substitutes is previously registered in an IC card to authenticate the owner or substitutes by collating the fingerprint information read in from a fingerprint scanner provided in an ATM with the fingerprint information registered in the IC card.

Also, JP-A No. 010826/2005 (Patent Document 2) discloses a biometric information authentication system wherein various kinds of biometric information, such as a fingerprint and iris, of a person are stored in a biometric information authentication server, and the biometric information requested from the authentication server is entered through a sensor to authenticate the person by comparing the entered biometric information with the biometric information selected from the authentication server.

### SUMMARY OF THE INVENTION

To conduct transactions using biometric authentication, a user has to make an application to that effect to a financial institution to have a card with an IC chip issued. The user goes to an office of the financial institution with the issued card, where user's biometric information is read in by a clerk's operations, and registered in the IC chip.

Generally, account information of a financial institution is written in a magnetic stripe of a card. However, when an IC chip is mounted in the card, the account information of the financial institution is registered in the IC chip, and during transactions, card authentication for verifying whether or not the card is valid by reading out the account information registered in the IC chip is recommended.

In newly added biometric authentication, therefore, after the account information registered in the IC chip is read out to verify that the card is the one that the financial institution has issued, the user's biometric information is read out through a sensor or the like, and collated with the biometric information previously registered in the IC chip to verify the user's identity. Since authentication processing thus becomes processing in time series, time required for a transaction becomes longer.

Also, when the card with the IC chip is not issued by the financial institution, the user goes to the office of the financial institution, and the biometric information read from the user by the clerk's operations is registered in a computer of a center. Upon transactions in the ATM, the biometric information read out by the ATM is transmitted to the center, and collated with the biometric information registered in the computer to authenticate the user's identity.

In either case, since the authentication becomes processing in time series, the time required for the transaction becomes longer, and a waiting time of the user in a place of the ATM becomes longer.

It is an object of the present invention to provide an automated teller machine capable of shortening time required for authentication of the user's identity using biometric information, and a system thereof.

According to one aspect of the present invention, an automated teller machine has: a display unit for displaying guidance of a transaction to a user; an input unit for inputting the transaction; a card mechanism having a card reader unit for reading information of a card to be used for the transaction; a biometric information reading unit for reading a user's biometric information; a storage unit for storing information to be used for the transaction; and a main control unit for controlling the respective units to perform processing for the transaction, wherein the automated teller machine includes: biometric authentication determining means for determining whether or not the user's biometric authentication is necessary; a biometric authentication processing mode for performing biometric authentication processing by collating the user's biometric information obtained by the biometric information reading unit with the user's biometric information previously registered in the storage unit; a personal information verification processing mode for verifying the user's identity by collating personal information entered from the input unit by the user with the personal information previously registered in the storage unit; and an IC card authentication processing mode for authenticating the card when the card to be used is an IC card, and wherein, according to results determined by the biometric authentication determining means, first processing for verifying the user's identity by the biometric authentication processing mode and the personal information verification processing mode is performed when the biometric authentication is necessary, and second processing for verifying the user's identity by the IC card authentication processing mode and the personal information verification processing mode is performed when the biometric authentication is unnecessary.

In a preferred embodiment, the card retains transaction information and biometric information authentication necessity information specific to the user in the storage unit, and the biometric authentication determining means determines whether or not the biometric authentication is necessary according to the biometric information authentication necessity information of the card read by the card reader unit.

Also, in a preferred embodiment, the display unit displays a screen including items of the transaction using the biometric authentication and the transaction using a cash card, and the biometric authentication determining means recognizes that the transaction using the biometric authentication is selected from the screen by the user to determine whether or not the user's biometric authentication is necessary.

Furthermore, in a preferred embodiment, in the first processing, the user is allowed to conduct a cash transaction without executing the IC card authentication processing mode when the user's identity is authenticated as a result of the biometric authentication.

Also, in a preferred embodiment, in the first processing, there is provided calculating means for summing up the number of the transactions conducted without executing the IC card authentication processing mode, and information on the number of the transactions summed up by the calculating means is stored in the storage unit of the card or other storage units in association with information relating to the user.

Also, in one embodiment, contents of the biometric information authentication necessity information may be arbitrarily set by a financial institution issuing the card.

Furthermore, one embodiment provides an automated teller system wherein the biometric authentication processing mode is executed in the IC card when the IC card is used, and executed in a host computer to which the automated teller machine is connected through a network when the IC card is not used.

According to one aspect of the present invention, an automated teller machine has: a display unit for displaying guidance of a transaction to a user; an input unit for inputting the transaction; a card mechanism having a card reader unit for reading information of a card to be used for the transaction; a biometric information reading unit for reading a user's biometric information; a storage unit for storing the information to be used for the transaction; and a main control unit for controlling the respective units to perform processing for the transaction, wherein the automated teller machine includes: biometric authentication determining means for determining whether or not the user's biometric authentication is necessary; a biometric authentication processing mode for performing biometric authentication processing by collating the user's biometric information obtained by the biometric information reading unit with the user's biometric information previously registered in the storage unit; a personal information verification processing mode for verifying the user's identity by collating personal information entered from the input unit by the user with the personal information previously registered in the storage unit; and an IC card authentication processing mode for authenticating the card when the card to be used is an IC card, and wherein, according to results determined by the biometric authentication determining means, there are performed at least partially in parallel first processing for verifying the user's identity by the biometric authentication processing mode and the personal information verification processing mode when the biometric authentication is necessary, and second processing for verifying the user's identity by the IC card authentication processing mode and the personal information verification processing mode when the biometric authentication is unnecessary.

According to another aspect of the present invention, an automated teller machine has: a display unit for displaying guidance of a transaction to a user; an input unit for inputting the transaction; a card mechanism having a card reader unit for reading information of a card to be used for the transaction; a biometric information reading unit for reading a user's biometric information; a storage unit for storing information to be used for the transaction; and a main control unit for controlling the respective units to perform processing for the transaction, wherein the automated teller machine includes: biometric authentication determining means for determining whether or not the user's biometric authentication is necessary; a biometric authentication processing mode for performing biometric authentication processing by collating the user's biometric information obtained by the biometric information reading unit with the user's biometric information previously registered in the storage unit; and an IC card authentication processing mode for authenticating the card when the card to be used is an IC card, and wherein, according to results determined by the biometric authentication determining means, first processing for verifying the user's identity by the biometric authentication processing mode is performed when the biometric authentication is necessary, and second processing for verifying the user's identity by the IC card authentication processing mode is performed when the biometric authentication is unnecessary.

In a preferred embodiment, the automated teller machine further includes a personal information verification processing mode for verifying the user's identity by collating personal information entered from the input unit by the user with the personal information previously registered in the storage unit, and in the first or second processing, the personal information verification mode is executed.

Also, in one embodiment, the display unit displays a first screen including plural items relating to the cash transaction, and a second screen including the items of the transaction using the biometric authentication and the transaction using the cash card, and the main control unit displays the first screen prior to the second screen, and displays the second screen when conducting the transaction selected through the first screen.

Furthermore, in another embodiment, the display unit displays the first screen including the plurality of items relating to the cash transaction, and the second screen including the items of the transaction using the biometric authentication and the transaction using the cash card, and the main control unit displays the second screen prior to the first screen, and displays the second screen while processing the transaction selected through the first screen.

Also, in a preferred embodiment, in the automated teller machine, the first and second processings are performed at least partially in parallel.

According to the present invention, time required for transaction processing may be shortened by processing the card authentication and the biometric authentication in parallel, and processing of the card authentication for the IC chip may be omitted. Furthermore, even when the user's biometric authentication may not be conducted due to trouble of the card reading means, a minimum transaction may be conducted if the card authentication for the IC chip may be conducted, and may lead to service to the user.

### BRIEF DESCRIPTION OF THE DRAWINGS

FIG. 1 is a block diagram of a biometric authentication system in an ATM according to one embodiment of the present invention;
FIG. 2 is an appearance view showing an example of a transaction card;
FIG. 3 is a schematic view of a cash transaction system including an ATM;
FIG. 4 is a data format view of a magnetic stripe of a transaction card;
FIG. 5 is examples of service functions incorporated into an IC chip;
FIG. 6 is a flowchart of transaction processing when a card is inserted first according to one embodiment of the present invention;
FIG. 7 is a view showing an example of a transaction selecting screen displayed on an ATM;
FIG. 8 is a flowchart of transaction processing when a card is inserted first according to one embodiment of the present invention;
FIG. 9 is a view showing an example of a transaction selecting screen of an ATM according to one embodiment of the present invention;
FIG. 10 is a flowchart of transaction processing when a card is inserted first according to one embodiment of the present invention;
FIG. 11 is a view showing an example of a transaction selecting screen of an ATM according to one embodiment of the present invention;
FIG. 12 is a flowchart of transaction processing when a transaction item is selected first according to one embodiment of the present invention;
FIG. 13 is a view showing an example of a transaction selecting screen of an ATM according to one embodiment of the present invention;
FIG. 14 is a flowchart of transaction processing when a transaction item is selected first according to one embodiment of the present invention.

### DESCRIPTION OF THE EMBODIMENTS

Embodiments of the present invention will be described below with reference to the accompanying drawings.

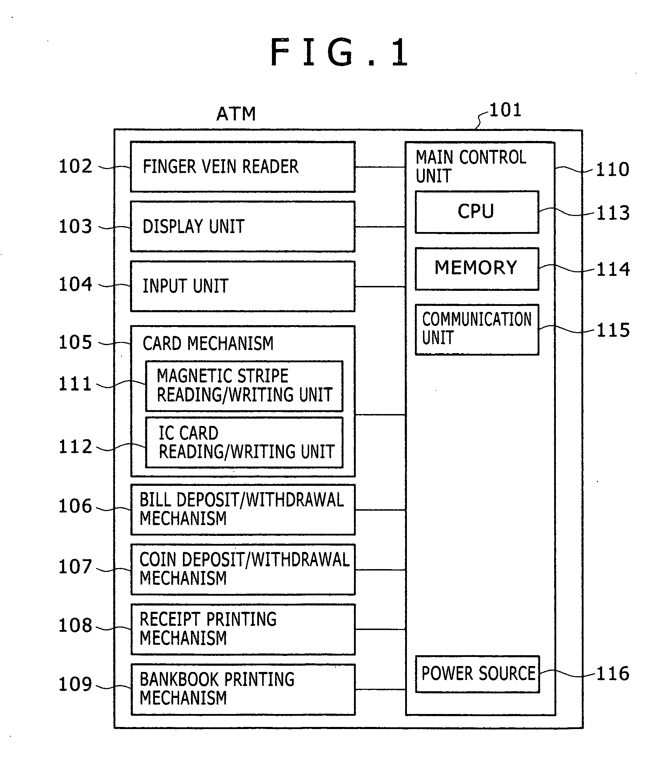

Fig. 1 is a block diagram of an ATM according to one embodiment of the present invention.

An ATM 101 is provided with a finger vein reader 102 for reading a finger vein pattern of a user as biometric information; a display unit 103, such as a liquid crystal, for displaying guidance of transactions to the user; an input unit 104, such as a touch panel, to be operated by the user for inputting information for transactions; a card mechanism 105 for processing an inserted card, a bill deposit/withdrawal mechanism 106 for processing bills for deposit/withdrawal or the like; a coin deposit/withdrawal mechanism 107 for processing coins for deposit/withdrawal or the like; a receipt printing mechanism 108 for processing printing on a receipt; and a bankbook printing mechanism 109 for processing printing on a bankbook; and a main control unit 110 for controlling entire operation.

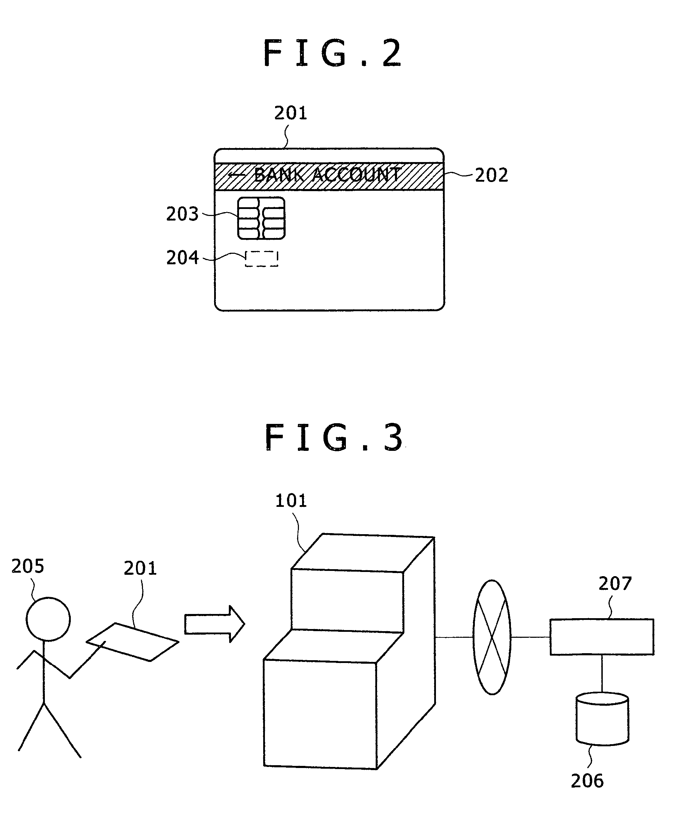

A card to be used in embodiments of the present invention is a card 201 mounted with a magnetic stripe 202 and a contact type IC chip 203, as shown in Fig. 2. Also, the card 201 may be mounted with a non-contact type IC chip 204.

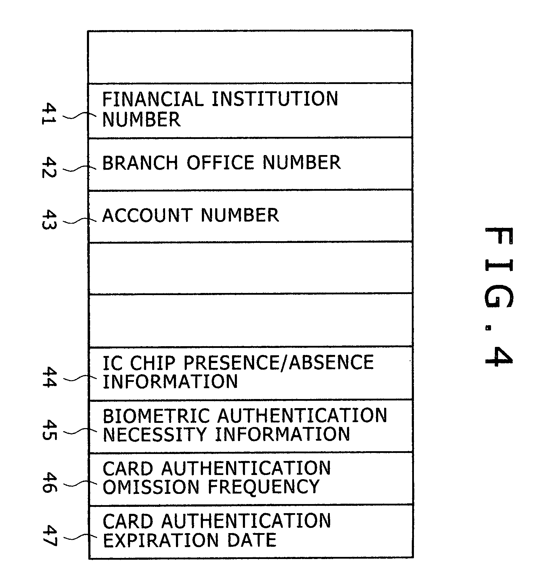

The card mechanism 105 shown in Fig. 1 is provided with a magnetic stripe reading/writing unit 111 for reading/writing information from/to the magnetic stripe of the card, and an IC card reading/writing unit 112 for reading/writing information from/to the IC chip. The IC card reading/writing unit 112 has an IC chip SAM (Secure Application Module) supplied from a financial institution to authenticate the card 201 with the IC chip 203 in it (card authentication processing). In general, an IC chip of an IC card issued by a financial institution is locked. Thus, after the IC chip is opened using the SAM, the cash card information shown in Fig. 4 is read to verify that the IC card has been issued by the financial institution itself.

The main control unit 110 controls the respective units, and has a CPU 113 for performing transaction processing, a memory 114 for storing programs, transaction information or the like for executing the transaction processing, a communication unit 115 for transmitting/receiving data to/from a host or a server, and a power source 116.

Fig. 3 is a schematic view of a cash transaction system including the ATM.

When a user 205 conducts a transaction in the ATM using the card 201, various kinds of information relating to the authentication and transaction of the user are transmitted to a host computer 207 of a center to authenticate the user's identity, and the information about an account balance of the user stored in a database 206 is updated.

Fig. 4 is an example of a data format of the magnetic stripe 202 of the transaction card.

The magnetic stripe 202 stores presence/absence information 44 of mounting of the IC chip 203; biometric authentication necessity information 45 showing whether or not execution of biometric authentication is necessary; a card authentication omission frequency 46 showing a frequency of transactions that card authentication for the IC chip 203 is omitted; and information 47 showing an expiration date of the card authentication, in addition to account information necessary for transactions in the financial institution, such as a financial institution number 41, a branch office number 42 and an account number 43.

The IC chip presence/absence information 44 is written as "present" when the IC chip is mounted in the card. The biometric authentication necessity information 45 is information showing whether or not authentication of, for example, a finger vein as the user's biometric information is carried out. The biometric authentication necessity information 45 is written as "necessary" when a customer registers the biometric information in the IC chip for the biometric authentication. Contents of the biometric authentication necessity information 45 may be arbitrarily set using a terminal of the financial institution issuing the card.

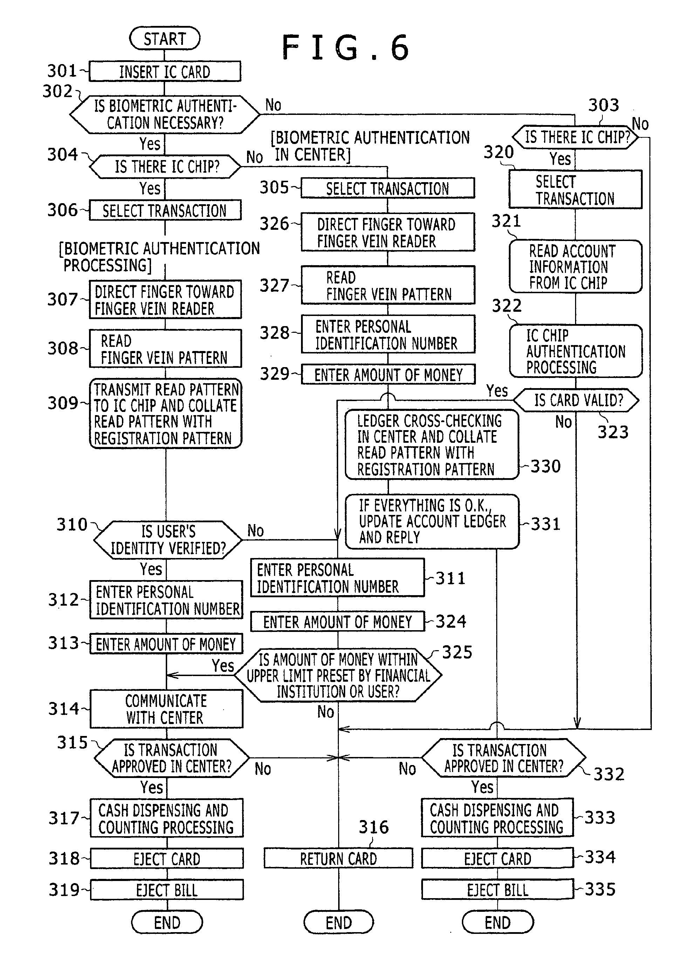

The card authentication omission frequency 46 shows the frequency of the transactions that the card authentication is omitted in the case where only the biometric authentication is executed and the card authentication is omitted, and a total value showing how many times IC card authentication processing set forth below (for example, processing of steps 303 to 323 shown in Fig. 6) has been performed is written. For example, the total value is calculated by the CPU 113 of the main control unit 110 of the ATM, and an updated value of the frequency is stored in the item of the card authentication omission frequency 46 of the card. In the card authentication expiration date 47, once the card authentication is conducted in a transaction, the card authentication is omitted in the following transactions until a period of time predetermined by the financial institution or customer expires.

Furthermore, one of the card authentication omission frequency 46 and card authentication expiration date 47 is selected and used according to an operation method, and may be provided in the IC chip 203. When the card authentication omission frequency 46 or card authentication expiration date 47 is provided in the IC chip, it may be assumed that the IC chip presence/absence information 44 is removed from the format shown in Fig. 4.

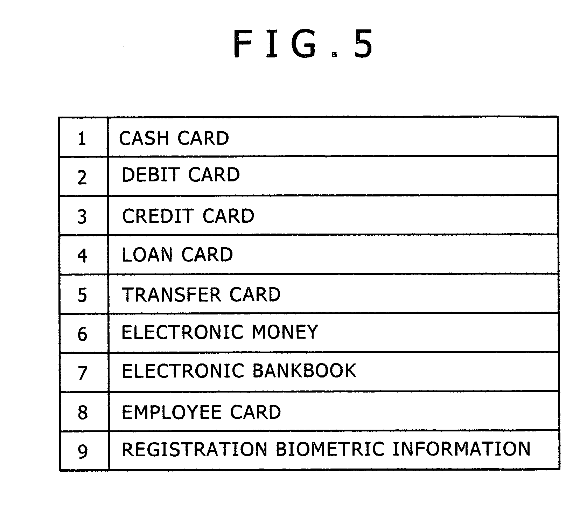

Fig. 5 shows service functions registered in the IC chip 203.

The card has plural uses, and a service function for each use is registered. Services to be registered include cash card, debit card, credit card, loan card, transfer card, electronic money, electronic bankbook and employee card as well as registration biometric information in which biometric information is registered. The above-mentioned registration information is determined by National Bank Association.

The financial institution issuing the card may select and support several functions from the service functions. For example, when the cash card, credit card, or the like is selected, information on the financial institution and the user's account information are registered, and the finger vein pattern of the user is registered as the registration biometric information.

When the card with the IC chip 203 is not issued by the financial institution, the finger vein pattern as the user's biometric information is registered in the database 206 of the host computer 207. In this case, the finger vein pattern read from the user by the finger vein reader 102 is transmitted to the host computer 207 through the communication unit 115, and collated with the finger vein pattern previously registered to authenticate the user.

Next, several embodiments of the transaction processing using the biometric authentication will be described with reference to the flowcharts after Fig. 6.

Fig. 6 is a flowchart of the transaction processing when the card is inserted first according to one embodiment of the present invention, and the transaction processing when the execution necessity information of the biometric authentication exists in the magnetic stripe 202.

When the user 205 inserts the card 201 to the card mechanism 105 of the ATM 101 upon transactions, information of the magnetic stripe 202 is read by the magnetic stripe reading/writing unit 111, and the information 41 to 43 such as account information, the biometric authentication necessity information 45, and the presence/absence information 44 of mounting of the IC chip 203 are obtained (step 301).

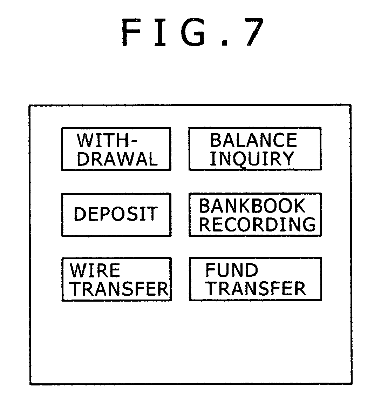

First, the biometric authentication execution necessity information is checked (step 302). When the biometric authentication is unnecessary, the presence/absence information 44 of the IC chip 203 is checked (step 303). When the biometric authentication is necessary in step 302, the presence/absence information 44 of mounting of the IC chip 203 is checked (step 304). When the biometric authentication is necessary and there is no IC chip 203, the biometric authentication is conducted in the host computer 207, and the transaction selecting screen is displayed on the display unit 103 (step 305). When there is the IC chip 203 in step 304, the transaction selecting screen is displayed on the display unit 103 (step 306). An example of the transaction selecting screen is shown in Fig. 7.

When the user 205 selects and presses a "withdrawal" key as a transaction in step 306, the biometric authentication processing is conducted. To execute the biometric authentication, the display unit 103 displays a guidance screen to perform operation guidance by voice, for example, to guide the user 205 to direct his finger toward the finger vein reader 102. When the user 205 directs his finger toward the finger vein reader 102 (step 307), the finger vein reader 102 reads the vein pattern of the finger (step 308). The finger vein pattern of the user 205 read by the finger vein reader 102 is transmitted to the IC chip 203 through the main control unit 110 and the IC card reading/writing unit 112, and collated with the finger vein authentication pattern previously registered in the memory by the CPU inside the IC chip 203 (step 309). The identity of the user 205 is verified by finger vein pattern collation (step 310). The above is the biometric authentication processing.

When the identity of the user 205 may not be verified, the user is prompted to enter the personal identification number (step 311). When the identity of the user 205 may be verified in step 310, the user is prompted to enter the personal identification number from the input unit 104 (step 312), and then an amount of money to be withdrawn (step 313).

The communication unit 115 of the main control unit 110 transmits to the host computer 207 of the center the account information read from the magnetic stripe, the entered personal identification number and amount of money to be withdrawn to receive the necessary information (step 314). The host computer 207 performs personal identification number collation to transmit to the ATM a reply as to whether or not the transaction is approved. The above is the personal identification number collation processing.

The ATM confirms whether the reply received from the host computer 207 is "the transaction is approved" or "the transaction is rejected" (step 315). When the reply received from the host computer 207 is "the transaction is rejected", the card 201 is returned to the user 205 (step 316).

When the transaction is approved in step 315, the bill deposit/withdrawal mechanism 106 and the coin deposit/withdrawal mechanism 107 prepare to dispense the amount of cash entered into the display unit 103 by the user 205 (step 317). The card mechanism 105 ejects the card 201, and the receipt printing mechanism 108 ejects the receipt (step 318). The bill deposit/withdrawal mechanism 106 and the coin deposit/withdrawal mechanism 107 eject bills or coins from respective dispensing ports (step 319). The user receives the ejected card, receipt, and cash, and a series of transactions end.

When there is no IC chip 203 in step 303, the card 201 is returned to the user 205 (step 316). When there is the IC chip 203, the transaction selecting screen is displayed on the display unit 103 (step 320). When the user 205 selects and presses the "withdrawal" key, the card authentication processing is performed. The account information of the financial institution is read from the IC chip 203 (step 321), and the card authentication processing for the IC chip 203 is performed (step 322). The above is the card authentication processing.

In the card authentication processing, it is verified whether or not the card 201 is valid (step 323). The verification is performed using the SAM of the IC card reading/writing unit 112. As a result of the verification, when the card is invalid, the card 201 is returned to the user 205 (step 316). On the other hand, when the card 201 may be verified in step 323, the user is prompted to enter the personal identification number (step 311), and then the amount of money to be withdrawn (step 324). Also, it is checked whether or not the amount of money to be withdrawn is within an upper limit preset by the financial institution or user 205 (step 325). When the amount of money to be withdrawn exceeds the upper limit, the card 201 is returned to the user 205 (step 316).

On the other hand, when the amount of money to be withdrawn is within the upper limit in step 325, the communication unit 115 of the main control unit 110 transmits to the host computer 207 the account information, personal identification number, and amount of money to be withdrawn to receive the necessary information (step 314). Thereafter, steps 315, 317, 318, 319 are carried out.

When the biometric authentication is conducted in the host computer 207 of the center in step 304, the transaction selecting screen to that effect is displayed on the display unit 103 (step 305). When the user 205 selects and presses the "withdrawal" key, the user 205 is guided by the guidance screen to direct his ginger toward the finger vein reader 102 (step 326). Also, the finger vein reader 102 reads the vein pattern of the user's finger (step 327). Next, the user is prompted to enter the personal identification number (step 328), and then the amount of money to be withdrawn (step 329).

The communication unit 115 of the main control unit 110 transmits the account information, personal identification number, amount of money to be withdrawn, and read finger vein pattern to the host computer 207. While the user's account information is cross-checked in the host computer 207 (ledger cross-checking), the received finger vein pattern is collated with the finger vein pattern previously registered in the database 206 (step 330). As a result of the ledger cross-checking and finger vein pattern collation, when the transaction is approved, an amount of money to be withdrawn is subtracted from an amount of account money to update a ledger of the user, and the reply is sent to the ATM (step 331).

The ATM receives the results of the ledger cross-checking and the necessary information from the host computer 207 to confirm whether the reply is "the transaction is approved" (step 332). When the reply from the center is "the transaction is rejected", the card 201 is returned to the user 205 (step 316). When the transaction is approved in step 332, the bill deposit/withdrawal mechanism 106 and the coin deposit/withdrawal mechanism 107 prepare to dispense cash (step 333). The card mechanism 105 ejects the card 201, the receipt printing mechanism 108 ejects the receipt (step 334) . Also, the bill deposit/withdrawal mechanism 106 and the coin deposit/withdrawal mechanism 107 eject bills or coins from the respective dispensing ports (step 335). The user 205 receives the ejected card 201, receipt, and cash, and a series of the selected transactions end.

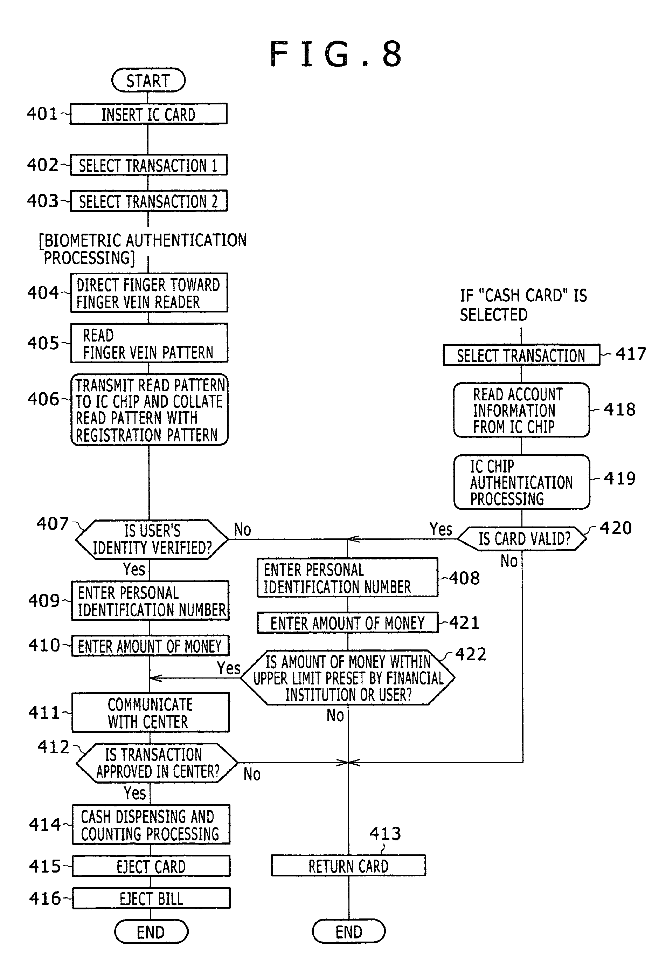

Fig. 8 shows the transaction processing when the card is inserted first according to a second embodiment of the present invention.

The transaction is the transaction processing when plural service functions are registered in the IC chip 203.

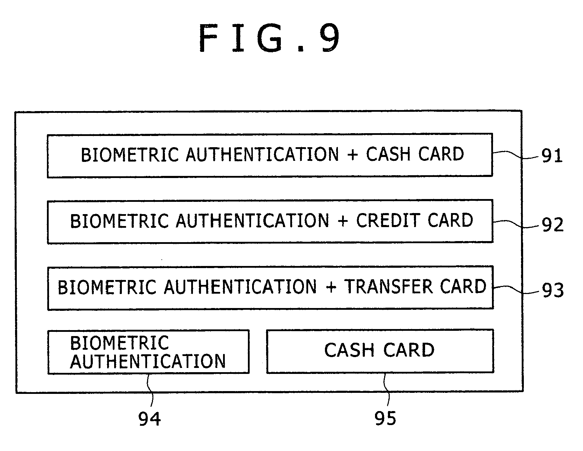

When the user 205 inserts the card 201 with the IC chip 203 in the card mechanism 105, the account information is read from the magnetic stripe 202, and thereafter, the registered service functions as shown in Fig. 5 are read from the IC chip 203 (step 401). Also, the transaction selecting screen that permits the user to select a service function from plural service functions 91 to 95 as shown in Fig. 9 is displayed (step 402). For example, when the user 205 selects the transaction 91 using a cash card with biometric authentication, the transaction selecting screen shown in Fig. 7 is displayed (step 403). When the user 205 selects the "withdrawal" key from the screen shown in Fig. 7, the processing moves on to the biometric authentication.

In the biometric authentication processing, when the user 205 directs his finger toward the finger vein reader 102 (step 404), the finger vein reader 102 reads the vein pattern of the finger (step 405). The finger vein pattern of the user 205 read by the finger vein reader 101 is transmitted to the IC chip 203, and collated with the finger vein authentication pattern previously registered in the IC chip 203 (step 406). The user's identity is verified by the finger vein pattern collation (step 407). When the user's identity may not be verified, the user is prompted to enter the personal identification number (step 408). When the user's identity may be verified in step 407, the user is prompted to enter the personal identification number from the input unit 104 (step 409), and then the amount of money to be withdrawn (step 410).

The communication unit 115 of the main control unit 110 transmits to the host computer 207 of the business center the account information read from the magnetic stripe, the entered personal identification number, and amount of money to be withdrawn to receive the necessary information as the reply from the host computer 207 (step 411).

Also, it is confirmed in the ATM whether or not the reply received from the host computer 207 is "the transaction is approved" or "the transaction is rejected" (step 412). When the reply from the host computer 207 is "the transaction is rejected" , the card 201 is returned to the user 205 (step 413) .

On the other hand, when the transaction is approved in step 412, the bill deposit/withdrawal mechanism 106 and the coin deposit/withdrawal mechanism 107 prepare to dispense the amount of cash entered into the display unit 103 by the user 205 (step 414). The card mechanism 105 ejects the card 201, and the receipt printing mechanism 108 ejects the receipt (step 415). Further, the bill deposit/withdrawal mechanism 106 and the coin deposit/withdrawal mechanism 107 eject bills or coins from respective dispensing ports (step 416).

Turning now to the figures, when the transaction 95 using the cash card (as shown in Fig. 9) is selected in step 402, the transaction selecting screen shown in Fig. 7 is displayed (step 417). When the user 205 selects the "withdrawal" key from the screen shown in Fig. 7, the card authentication processing for the IC chip 203 is conducted. The account information of the cash card is read from the IC chip 203 (step 418), the card authentication processing for the IC chip 203 is performed (step 419).

In the card authentication processing, it is verified, using the SAM of the IC card reading/writing unit 112, whether or not the card 201 mounted with the IC chip 203 is valid (step 420). When the card may not be verified, the card 201 is returned to the user 205 (step 413). When the card 201 may be verified in step 420, the user is prompted to enter the personal identification number (step 408), and then, the amount of money to be withdrawn (step 421).

The main control unit 110 checks as to whether or not the amount of money to be withdrawn is within the upper limit preset by the financial institution or user (step 422). When the amount of money to be withdrawn exceeds the upper limit, the card 201 is returned to the user 205 (step 413). When the amount of money to be withdrawn is within the upper limit in step 422, the communication unit 115 of the main control unit 110 transmits to the host computer 207 the account information, personal identification number, and amount of money to be withdrawn to receive the necessary information from the host computer 207 (step 411). Thereafter, steps 412, 414, 415, 416 are carried out, however, these steps are the same as described above, and descriptions are thus omitted.

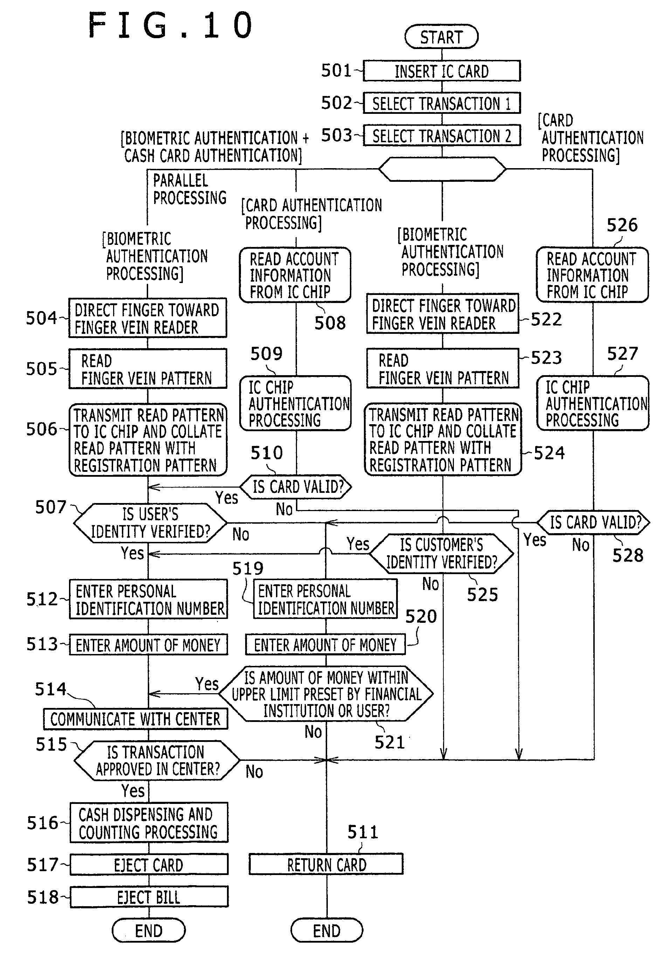

Fig. 10 shows the transaction processing when the card is inserted first according to a third embodiment of the present invention, and is a flowchart of the transaction processing when the user 205 selects a transaction type.

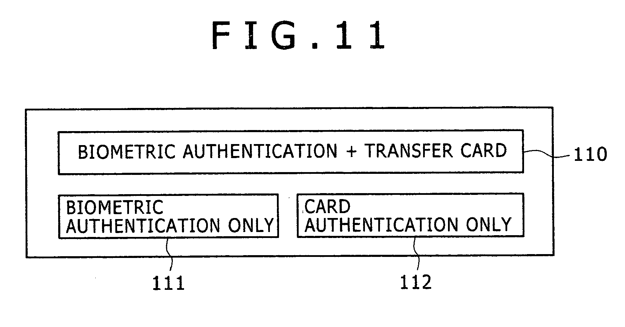

When the user 205 inserts the card 201 with the IC chip 203 in the card mechanism 105, the account information is read from the magnetic stripe 202, and then, the service functions shown in Fig. 5 are read from the IC chip 203 (step 501). And, the transaction selecting screen is displayed shown in Fig. 7 (step 502). When the user selects the "withdrawal" key from the screen shown in Fig. 7, the transaction selecting screen, as shown in Fig. 11 described below, for permitting the user to select transaction services is displayed (step 503). When the user 205 selects a transaction using a function 110 of the biometric authentication plus card authentication, the processing branches to the left side of processing flows, and the biometric authentication and card authentication are processed in parallel.

In the biometric authentication processing, when the user directs his finger toward the finger vein reader 102 (step 504), the finger vein reader 102 reads the user's finger vein pattern (step 505). The finger vein pattern read by the finger vein reader 102 is transmitted to the IC chip 203, and collated with the finger vein pattern previously registered in the IC chip 203 (step 506). The user's identity is verified by pattern collation (step 507).

On the other hand, in the card authentication processing, the account information of the cash card is read from the IC chip 203 (step 508) to conduct the card authentication processing for the IC chip 203 (step 509). It is verified whether or not the card 201 with the IC chip 203 is valid (step 510). When the card may not be verified, the card 201 is returned to the user 205 (step 511). When the card 201 may be verified in step 510, and the user's identity may not be verified in step 507, the user is prompted to enter the personal identification number (step 519). When the user's identity may be verified in step 507, the user is prompted to enter the personal identification number from the input unit 104 (step 512), and then the amount of money to be withdrawn (step 513).

The communication unit 115 of the main control unit 110 transmits to the host computer 207 of the business center the account information read from the magnetic stripe, entered personal identification number, and amount of money to be withdrawn to receive the reply including the necessary information from the host computer 207 (step 514).

It is confirmed in the ATM whether the reply received from the host computer 207 is "the transaction is approved" or "the transaction is rejected" (step 515). When the reply received from the host computer 207 is "the transaction is rejected", the card 201 is returned to the user 205 (step 511).

When the user's identity may not be verified in step 507, the user is prompted to enter the personal identification number (step 519), and then an amount of money to be withdrawn (step 520). Then, it is checked whether or not the amount of money to be withdrawn is within the upper limit preset by the financial institution or user (step 521). When the amount of money to be withdrawn exceeds the upper limit, the card 201 is returned to the user 205 (step 511). When the amount of money to be withdrawn is within the upper limit in step 521, the communication unit 115 of the main control unit 110 transmits to the host computer 207 of the business center the account information, personal identification number, and amount of money to be withdrawn to receive the reply including the necessary information (step 514). Thereafter, steps 515, 516, 517, 518 are carried out, however, these steps are the same as described above, and descriptions are thus omitted.

When the user selects a transaction using the biometric authentication only in step 503, the processing moves on to the user's biometric authentication. When the user 205 directs his finger toward the finger vein reader 102 (step 522), the finger vein reader 102 reads the vein pattern of the finger (step 523). The finger vein pattern of the user 205 read by the finger vein reader 102 is transmitted to the IC chip 203, and collated with the finger vein authentication pattern previously registered in the IC chip 203 (step 524).

The user's identity is verified by the pattern collation (step 525). When the identity of the user may not be verified, the card 201 is returned to the user 205 (step 511). When the user's identity may be verified in step 525, the user is prompted to enter the personal identification number (step 512). Thereafter, steps 513, 514, 515, 516, 517, 518 are carried out in the same way.

When the user selects the transaction using the card authentication only in step 503, the card authentication processing is conducted. That is, the account information of the cash card is read from the IC chip 203 (step 526), the card authentication processing for the IC chip 203 is performed (step 527). It is verified whether or not the card 201 with the IC chip 203 is valid (step 528). When the card may not be verified, the card 201 is returned to the user 205 (step 511). On the other hand, when the card 201 may be verified in step 528, the user is prompted to enter the personal identification number (step 519). Thereafter, steps 520, 521 are carried out in the same way.

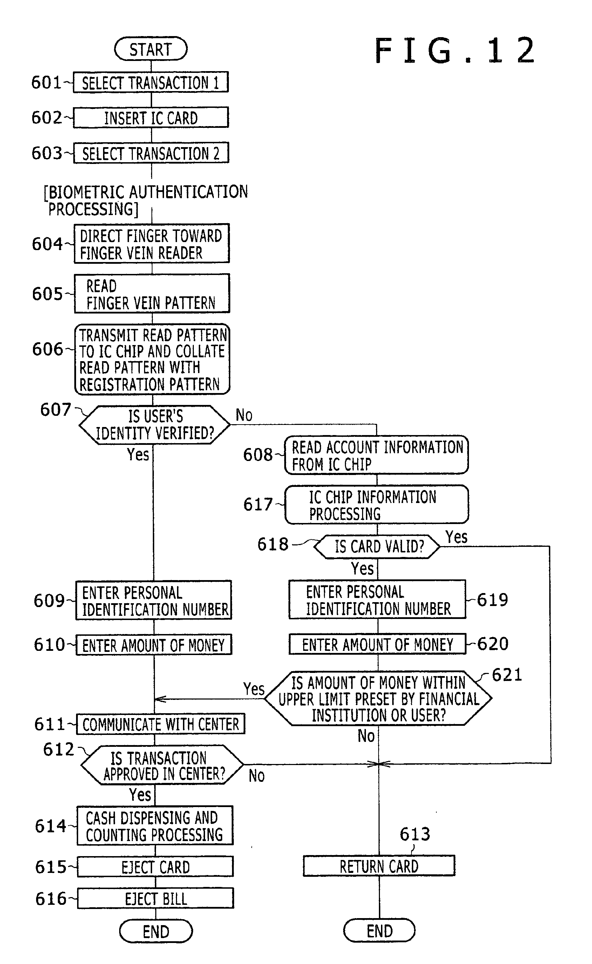

Fig. 12 is a flowchart of the transaction processing when a transaction item is selected first according to a forth embodiment of the present invention.

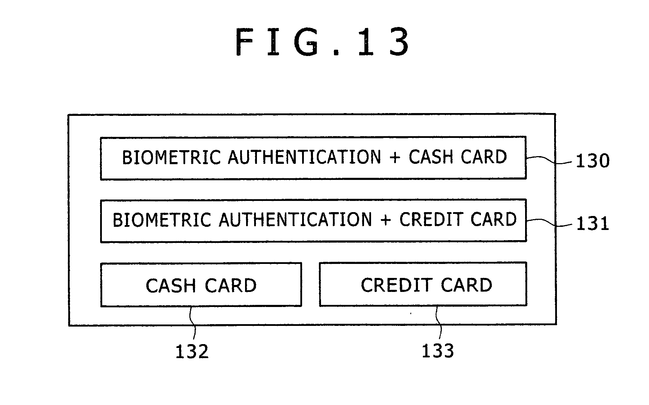

The transaction selecting screen shown in Fig. 7 is displayed to the user (step 601), and the user selects the "withdrawal" key. Next, when the user inserts the card 201 with the IC chip 203 in it in the card mechanism 105, the account information is read from the magnetic strip 202, and then, the service functions shown in Fig. 5 are read from the IC chip 203 (step 602). The service function of a cash card, credit card or the like to be processed in association with the transaction, "withdrawal" selected in step 601 is extracted, and the transaction selecting screen that permits the user to select a desired type of transaction is displayed, as shown in Fig. 13 (step 603).

Assuming that the user selects a transaction 130 using a cash card with the biometric authentication from the selecting screen, when the user directs his finger toward the finger vein reader 102 (step 604), the finger vein reader 102 reads the vein pattern of the finger (step 605). The user's finger vein pattern read by the finger vein reader 102 is transmitted to the IC chip 203, and collated with the finger vein authentication pattern previously registered in the IC chip 203 (step 606). The user's identity is verified by the pattern collation (step 607).

As a result of the verification, when the user's identity may not be verified, the account information of the cash card is read from the IC chip 203 (step 608). On the other hand, when the user's identity may be verified in step 607, the user is prompted to enter the personal identification number from the input unit 104 (step 609), and then an amount of money to be withdrawn (step 610).

The communication unit 115 of the main control unit 110 transmits to the host computer 207 of the center the account information read from the magnetic stripe, the entered personal identification number, and amount of money to be withdrawn to receive the necessary information as the reply (step 611).

It is confirmed in the ATM whether the reply received from the host computer 207 is "the transaction is approved" or "the transaction is rejected" (step 612). When the reply is "the transaction is rejected", the card 201 is returned to the user (step 613). On the other hand, when the reply is "the transaction is approved", the bill deposit/withdrawal mechanism 106 and the coin deposit/withdrawal mechanism 107 prepare to dispense the amount of cash entered into the display unit 103 by the user (step 614). The card mechanism 105 ejects the card 201, and the receipt printing mechanism 108 ejects the receipt (step 615). The bill deposit/withdrawal mechanism 106 and the coin deposit/withdrawal mechanism 107 eject bills or coins from respective dispensing ports (step 616).

When the user's identity may not be verified in step 607, the card authentication processing is conducted. The account information of the cash card is read from the IC chip 203 (step 608), and the card authentication processing for the IC chip 203 is performed (step 617). It is verified whether the card 201 mounted with the IC chip 203 is valid (step 618) . When the card may not be verified, the card 201 is returned to the user (step 613). On the other hand, when the card 201 may be verified, the user is prompted to enter the personal identification number (step 619), and then the amount of money (step 620). It is checked whether or not the amount of money to be withdrawn is within the upper limit preset by the financial institution or user (step 621). When the amount of money to be withdrawn exceeds the upper limit, the card 201 is returned to the user (step 613). When the amount of money to be withdrawn is within the upper limit in step 621, the communication unit 115 of the main control unit 110 transmits to the host computer 207 of the business center the account information, personal identification number, and amount of money to be withdrawn to receive the necessary information (step 611). Thereafter, steps 612, 614, 615, 616 are carried out in the same way.

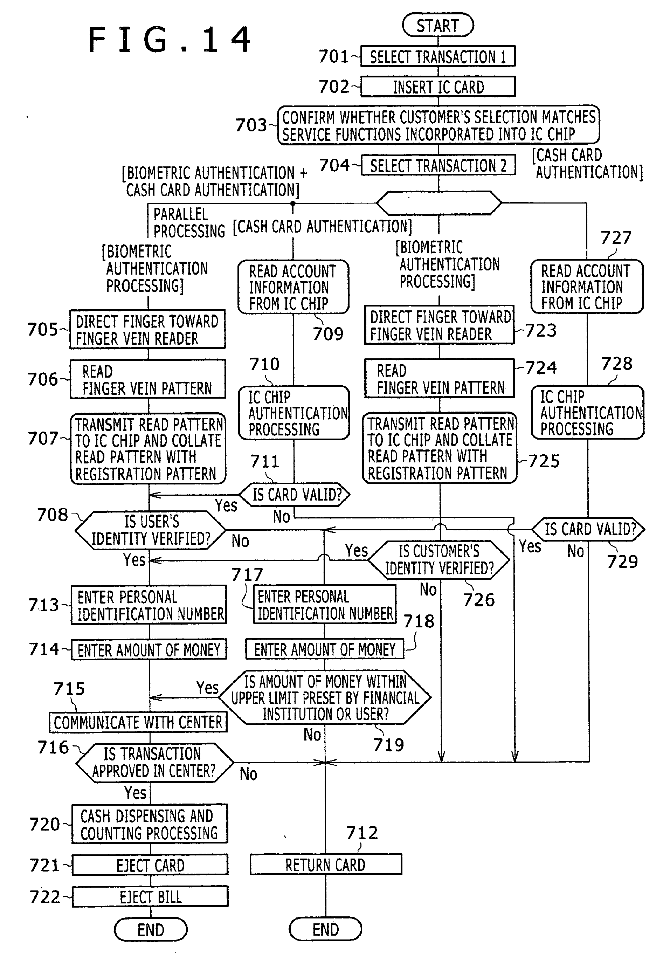

Next, a fifth embodiment of the present invention will now be described with reference to Fig. 14. This embodiment is the transaction when a transaction item is selected first, and the transaction processing when the user selects the transaction type.

The transaction selecting screen shown in Fig. 9 is displayed to the user to permit the user to select a desired transaction service (step 701). When the user selects the transaction 91 using the cash card with the biometric authentication, and inserts the card 201 with the IC chip 203 in the card mechanism 105, the account information is read from the magnetic strip 202, and then the registration service functions shown in Fig. 5 are read from the IC chip 203, (step 702).

Next, it is confirmed whether the transaction contents selected by the user match the service functions registered in the IC chip 203 (step 703), and the transaction selecting screen shown in Fig. 7 is displayed (step 704). When the user selects the "withdrawal" key from the transaction selecting screen, the processing branches to the left side of the processing flows, and the biometric authentication and card authentication are processed in parallel.

In the biometric authentication processing, when the user directs his finger toward the finger vein reader 102 (step 705), the finger vein reader 102 reads the vein pattern of the finger (step 706). The user's finger vein pattern read by the finger vein reader 102 is transmitted to the IC chip 203, and collated with the finger vein authentication pattern previously registered in the IC chip 203 (step 707). The user's identity is verified by the pattern collation (step 708).

On the other hand, in the cash card authentication processing, the account information of the cash card is read from the IC chip 203 (step 709), and the card authentication processing for the IC chip 203 is performed (step 710). It is verified whether the card 201 with the IC chip 203 is valid (step 711). When the card may not be verified, the card 201 is returned to the user 205 (step 712). On the other hand, when the card 201 may be verified, and the user's identity may be verified in step 708, the user is prompted to enter the personal identification number (step 713), and then the amount of money to be withdrawn (step 714).

The communication unit 115 of the main control unit 110 transmits to the host computer 207 of the center the account information read from the magnetic stripe, the entered personal identification number, and amount of money to be withdrawn to receive the reply including the necessary information (step 715).

It is confirmed in the ATM whether the reply received from the host computer 207 is "the transaction is approved" or "the transaction is rejected" (step 716). When the reply is "the transaction is rejected", the card 201 is returned to the user 205 (step 712). On the other hand, when the reply is "the transaction is approved", the bill deposit/withdrawal mechanism 106 and the coin deposit/withdrawal mechanism 107 prepare to dispense the amount of cash entered into the display unit 103 by the user (step 720). The card mechanism 105 ejects the card 201, and the receipt printing mechanism 108 ejects the receipt (step 721). The bill deposit/withdrawal mechanism 106 and the coin deposit/withdrawal mechanism 107 eject bills or coins from the respective dispensing ports (step 722).

When the user's identity may not be verified in step 708, the user is prompted to enter the personal identification number (step 717), and then the amount of money to be withdrawn (step 718). It is checked whether or not the amount of money to be withdrawn is within an upper limit preset by the financial institution or user (step 719). When the amount of money to be withdrawn exceeds the upper limit, the card 201 is returned to the user (step 712). When the amount of money to be withdrawn is within the upper limit in step 719, the communication unit 115 of the main control unit 110 transmits to the host computer 207 of the business center the account information, personal identification number, and amount of money to be withdrawn to receive the necessary information (step 715). Thereafter, steps 716, 720, 721, 722 are carried out in the same way.

When the user selects the transaction 94 using the biometric authentication only in step 704, the biometric authentication processing is performed. When the user directs his finger toward the finger vein reader 102 (step 723), the finger vein reader 102 reads the vein pattern of the finger (step 724). The user's finger vein pattern read by the finger vein reader 102 is transmitted to the IC chip 203, and collated with the finger vein authentication pattern previously registered in the IC chip 203 (step 725). The user's identity is verified by the pattern collation (step 726). When the identity of the user may not be verified, the card 201 is returned to the user (step 712). When the user's identity may be verified, the user is prompted to enter the personal identification number (step 713), and thereafter, steps 714, 715, 716, 720, 721, 722 are carried out in the same way.

When the user selects the transaction 95 using the cash card authentication only in step 704, the account information of the cash card is read from the IC chip 203 (step 727), the card authentication processing for the IC chip 203 is performed (step 728). It is verified whether or not the card 201 with the IC chip 203 is valid (step 729). When the card may not be verified, the card 201 is returned to the user 205 (step 712). When the card 201 may be verified in step 729, the user is prompted to enter the personal identification number (step 717), and thereafter, steps 718 and 719 are carried out.

In the embodiment as described above, according to the inventors' calculation, when a cash transaction is carried out in an ATM using a card with an existing magnetic stripe, it takes about ten seconds to conduct the transaction. When IC card authentication processing is added to the card, the time required for the transaction is added by six seconds to become about sixteen seconds. When the biometric authentication processing is further added thereto, the time required for the transaction is added by seven to ten seconds to become about 23 to 26 seconds. However, according to the embodiment of the present invention, if the authentication of the card with the IC chip may be omitted, the time required for the transaction is shortened by about six seconds to become 17 to 20 seconds.

Also, according to the embodiment wherein the user's biometric authentication processing and the card authentication processing are performed in parallel, the time required for the transaction becomes about 16 seconds or 17 to 20 seconds, and drastically shortened.

The several embodiments of the present invention have been described above. However, the present invention should not be limited to any of the embodiments as described above, and various modifications may be made and embodied.

For example, in the embodiments as described above, an example of the biometric authentication using the finger vein as the biometric information has been described, however a fingerprint, iris, face, signature or the like may be instead used as the biometric authentication.

Further, in the embodiments as described above, the frequency of the transactions that the card authentication processing is omitted is stored in the magnetic stripe of the card as shown in Fig. 4, however, the present invention is not limited to the embodiments. For example, the frequency of the transactions may be counted in turn and stored in a storage device of the IC chip or host computer 207, and the card authentication for the IC chip may be conducted at every prescribed number of times. Then, when the card may be authenticated, a counted value of the frequency of omission is cleared to maintain security. Or, it is also acceptable that a period of time is set by the financial institution or customer so that the card authentication for the IC chip may be omitted until the period of time expires once the IC chip is authenticated. Also, as another example, the card authentication may be periodically conducted so as to maintain security even if the card authentication processing is omitted in usual transactions.

Furthermore, in the embodiments as described above, the personal identification number collation is conducted in the host computer, however, may also be conducted in the ATM. Or, it is also acceptable that the entered personal identification number is collated with the user's personal identification number previously registered in the memory of the IC card by the CPU inside the IC card.

Also, according to another modified example, when the user's identity is verified as a result of the biometric authentication, the personal identification number collation may be omitted.

## Claims

1. An automated teller machine having a display unit for displaying guidance of a transaction to a user; an input unit for inputting the transaction; a card mechanism having a card reader unit for reading information of a card to be used for the transaction; a biometric information reading unit for reading a user's biometric information; a storage unit for storing the information to be used for the transaction; and a main control unit for controlling the respective units to perform processing for the transaction, comprising:
biometric authentication determining means for determining whether or not the user's biometric authentication is necessary;
a biometric authentication processing mode for performing biometric authentication processing by collating the user's biometric information obtained by the biometric information reading unit with the user's biometric information previously registered in the storage unit;
a personal information verification processing mode for verifying the user's identity by collating personal information entered from the input unit by the user with the personal information previously registered in the storage unit; and
an IC card authentication processing mode for authenticating the card when the card to be used is an IC card,
wherein, according to results determined by the biometric authentication determining means, first processing for verifying the user's identity by the biometric authentication processing mode and the personal information verification processing mode is performed when the biometric authentication is necessary, and second processing for verifying the user's identity by the IC card authentication processing mode and the personal information verification processing mode is performed when the biometric authentication is unnecessary.

2. The automated teller machine according to claim 1, wherein the card retains transaction information and biometric information authentication necessity information specific to the user in the storage unit, and the biometric authentication determining means determines whether or not the biometric authentication is necessary according to the biometric information authentication necessity information of the card read by the card reader unit.

3. The automated teller machine according to claim 1, wherein the display unit displays a screen including items of the transaction using the biometric authentication and/or the transaction using a cash card, and the biometric authentication determining means recognizes that the transaction using the biometric authentication is selected from the screen by the user to determine whether or not the user's biometric authentication is necessary.

4. The automated teller machine according to claim 1, wherein, in the first processing, the user is allowed to conduct a cash transaction without executing the IC card authentication processing mode when the user's identity is authenticated as a result of the biometric authentication.

5. The automated teller machine according to claim 4, wherein, in the first processing, there is provided calculating means for summing up the number of the transactions conducted without executing the IC card authentication processing mode, and information on the number of the transactions summed up by the calculating means is stored in the storage unit of the card or other storage units in association with information relating to the user.

6. The automated teller machine according to claim 2, wherein contents of the biometric information authentication necessity information may be arbitrarily set by a financial institution issuing the card.

7. An automated teller machine system including the automated teller machine according to claim 1, wherein the biometric authentication processing mode is executed in the IC card when the IC card is used, and executed in a host computer to which the automated teller machine is connected through a network when the IC card is not used.

8. An automated teller machine having a display unit for displaying guidance of a transaction to a user; an input unit for inputting the transaction; a card mechanism having a card reader unit for reading the information of a card to be used for the transaction; a biometric information reading unit for reading a user's biometric information; a storage unit for storing the information to be used for the transaction; and a main control unit for controlling the respective units to perform processing for the transaction, comprising:
biometric authentication determining means for determining whether or not the user's biometric authentication is necessary;
a biometric authentication processing mode for performing biometric authentication processing by collating the user's biometric information obtained by the biometric information reading unit with the user's biometric information previously registered in the storage unit;
a personal information verification processing mode for verifying the user's identity by collating personal information entered from the input unit by the user with the personal information previously registered in the storage unit; and
an IC card authentication processing mode for authenticating the card when the card to be used is an IC card,
wherein, according to results determined by the biometric authentication determining means, there are performed at least partially in parallel first processing for verifying the user's identity by the biometric authentication processing mode and the personal information verification processing mode when the biometric authentication is necessary, and second processing for verifying the user's identity by the IC card authentication processing mode and the personal information verification processing mode when the biometric authentication is unnecessary.

9. An automated teller machine having a display unit for displaying the guidance of a transaction to the user; an input unit for inputting the transaction; a card mechanism having a card reader unit for reading information of a card to be used for the transaction; a biometric information reading unit for reading a user's biometric information; a storage unit for storing information to be used for the transaction; and a main control unit for controlling the respective units to perform processing for the transaction, comprising:
biometric authentication determining means for determining whether or not the user's biometric authentication is necessary;
a biometric authentication processing mode for performing biometric authentication processing by collating the user's biometric information obtained by the biometric information reading unit with the user's biometric information previously registered in the storage unit; and
an IC card authentication processing mode for authenticating the card when the card to be used is the IC card,
wherein, according to results determined by the biometric authentication determining means, first processing for verifying the user's identity by the biometric authentication processing mode is performed when the biometric authentication is necessary, and second processing for verifying the user's identity by the IC card authentication processing mode is performed when the biometric authentication is unnecessary.

10. The automated teller machine according to claim 9, further comprising a personal information verification processing mode for verifying the user's identity by collating the personal information entered from the input unit by the user with the personal information previously registered in the storage unit, wherein the personal information verification processing mode is executed in the first or second processing.

11. The automated teller machine according to claim 9, wherein:
the display unit displays a first screen including a plurality of items relating to a cash transaction, and a second screen including items of a transaction using the biometric authentication and the transaction using a cash card; and
the main control unit displays the first screen prior to the second screen, and displays the second screen when conducting a transaction selected through the first screen.

12. The automated teller machine according to claim 9, wherein:
the display unit displays the first screen including the plurality of items relating to the cash transaction and the second screen including the items of the transaction using the biometric authentication and the transaction using the cash card; and
the main control unit displays the second screen prior to the first screen, and displays the second screen while processing the transaction selected through the first screen.

13. The automated teller machine according to claim 9, wherein the first and second processings are performed at least partially in parallel.
